# DEMANDE DE BREVET EUROPEEN

(11) **EP 1 137 229 A1**
(43) Date de publication de la demande: **26.09.2001**
(21) Numéro de dépôt: 01115285.7
(22) Date de dépôt: 30.12.1998
(51) Int. Cl.: H04L 12/66, H04Q 11/04

(54) **Unité de raccordement d'abonné, et centre de commutation permettant de concentrer des trames internet**

(30) Priorité: 31.12.1997 FR 9716812
(62) Demande divisionnaire de: 98403328.2
(71) Demandeur: ALCATEL, 75008 Paris (FR)
(72) Inventeur: Lassaux, Jean, 22300 Lannion (FR); Levy, Michel, 91400 Gometz La Ville (FR)
(74) Mandataire: Sciaux, Edmond

(57) **Abrégé**

Selon un mode de réalisation de l'invention, un centre de commutation (SW) relié à un réseau (FRN ; ATMN) de transmission de données, et comportant des moyens de traitement d'appels (CP' ; CP") et une matrice de commutation (SM ; AM), comporte en outre un routeur Internet (RT'; RT") ; et ce les moyens de traitement d'appels (CP') comportent des moyens pour commander la matrice (SM) de façon à faire transiter par ce routeur les communications vers un fournisseurs d'accès au service Internet.

Application aux centraux téléphoniques RNIS.

## Description

L'invention concerne une unité de raccordement d'abonnés, et un centre de commutation permettant de concentrer des trames dites Internet, c'est à dire des trames formées selon le protocole dit de transmission point à point, et selon le protocole Internet.

De nombreux utilisateurs d'Internet utilisent le réseau téléphonique public pour accéder à leur fournisseur d'accès. Les communications acheminant des données entre un fournisseur d'accès à Internet et un terminal d'abonné, via un réseau téléphonique classique, durent plus longtemps que les communications téléphoniques classiques. Par contre, la transmission de ces données est effectuée en salves séparées par de longues périodes d'inactivité.

On rappelle que dans un réseau téléphonique analogique, un terminal d'abonné émet et reçoit des trames Internet au moyen d'un modem situé à proximité de ce terminal, et d'un autre modem situé à proximité d'un serveur constituant un point d'accès à un réseau de transmission de données.

Un type particulier de modem, appelé ATM / ADSL (Asynchronous Transfer Mode/Asymetrical Digital subscriber Loop) permet de transmettre sur une ligne analogique, dans une bande de fréquences supérieure à la bande téléphonique, des trames Internet ayant un débit élevé dans le sens allant du terminal d'abonné vers le réseau.

On rappelle que dans un réseau numérique à intégration de services (RNIS), l'accès de base d'un abonné est constitué :
- de deux canaux B ayant un débit de 64 Kb/s ;
- et d'un canal D ayant un débit de 16 Kb/s, qui est prévu pour transmettre des données.

Chaque terminal d'abonné RNIS est reliée à un centre de commutation locale, via une unité de raccordement, qui peut être déportée à une certaine distance du centre de commutation. Dans l'unité de raccordement d'abonnés, un certain nombre de cartes d'abonné constituent l'interface avec les lignes d'abonné. Lorsqu'un abonné utilise le canal D pour transmettre classiquement des données, il est connu de concentrer ces données, au niveau de la carte d'abonné, au moyen d'un circuit appelé contrôleur HDLC qui met en oeuvre le protocole classique HDLC, puis de commuter les trames de données concentrées pour les acheminer vers une passerelle d'accès à un commutateur de trames de données.

Lorsqu'un abonné utilise un canal D pour transmettre des trames Internet, il est connu de séparer ces trames de celles dédiées à la signalisation puis de router ces trames telles qu'elles sont, dans le commutateur local, pour les acheminer jusqu'à un noeud d'accès à un réseau de transmission de données.

Lorsqu'un abonné utilise un canal B, ou les deux canaux B, pour transmettre des trames Internet, il est connu de router ces trames telles qu'elles sont, dans le commutateur local, pour les acheminer jusqu'à un noeud d'accès à un réseau de transmission de données. Ce noeud d'accès est éloigné. Il est situé au-delà du commutateur local, ou même au-delà d'un ou plusieurs noeuds de transit.

Dans le cas d'un réseau RNIS, une communication vers un fournisseur d'accès Internet occupe au moins un canal B ayant un débit de 64 Kb/s alors que la transmission de données du fournisseur d'accès Internet vers le terminal d'abonné a un débit moyen de l'ordre de 5 Kb/s.

Quel que soit le type de transmission utilisé entre le terminal d'abonné et le fournisseur d'accès au service Internet, les ressources du réseau téléphonique sont alors sous-employées. D'autre part, le trafic Internet est en croissance rapide. Les réseaux téléphoniques risquent donc d'être congestionnés par le trafic Internet.

Le but de l'invention est de proposer une solution qui soit simple et peu coûteuse à mettre en oeuvre dans les centres de commutation futurs ou déjà existants.

Un premier objet de l'invention est un centre de commutation relié à un réseau de transmission de données, et comportant des moyens de traitement d'appels et une matrice de commutation, caractérisé en ce qu'il comporte en outre un routeur Internet ; et ce que les moyens de traitement d'appels comportent des moyens pour commander la matrice de façon à faire transiter par ce routeur les communications vers un fournisseurs d'accès au service Internet.

Un deuxième objet de l'invention est une unité de raccordement d'abonnés reliée à un réseau de transmission de données, et comportant une matrice de commutation, caractérisée en ce qu'elle comporte en outre un routeur Internet ; et en ce que cette matrice est susceptible d'être commandée de façon à faire transiter par ce routeur les communications vers un fournisseurs d'accès au service Internet.

Un troisième objet de l'invention est un centre de commutation relié à un réseau de transmission de données, et comportant des moyens de traitement d'appels et une matrice de commutation , caractérisé en ce qu'il comporte en outre une pluralité de modems ; et ce que les moyens de traitement d'appels comportent des moyens pour commander la matrice de façon à faire transiter par ces modems les communications vers un fournisseurs d'accès au service Internet.

Un quatrième objet de l'invention est une unité de raccordement d'abonnés reliée à un réseau de transmission de données, et comportant une matrice de commutation, caractérisée en ce qu'elle comporte en outre une pluralité de modems ; et en ce que la matrice de commutation est susceptible d'être commandée de façon à faire transiter par ces modems les communications vers un fournisseurs d'accès au service Internet.

Les centres de commutation et les unités de raccordement ainsi caractérisés permettent d'extraire le trafic Internet du réseau téléphonique le plus près possible de la carte d'abonné, pour épargner des ressources de ce réseau téléphonique. L'invention sera mieux comprise et d'autres caractéristiques apparaîtront à l'aide de la description ci-dessous et des figures l'accompagnant :
- La figure 1 représente le schémas synoptique d'un exemple de centre de commutation plus particulièrement adapté pour des terminaux d'abonné analogiques, selon l'invention.
- La figure 2 représente le schémas synoptique d'un exemple de centre de commutation à mode de transfert asynchrone (ATM) plus particulièrement adapté pour des terminaux d'abonné comportant un modem ADSL (Asymetrical Data Serial Link), selon l'invention.

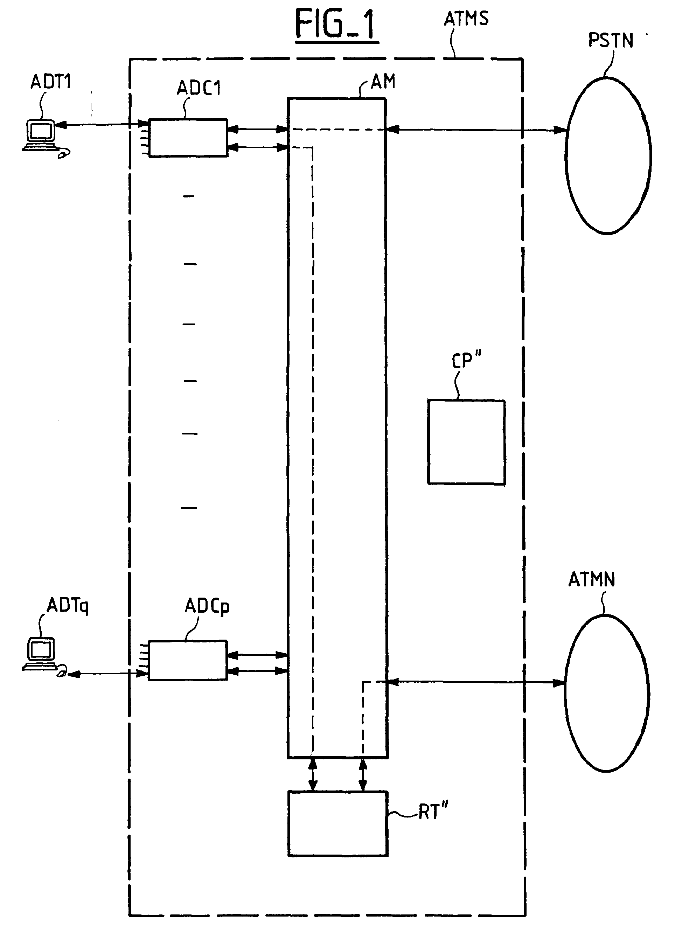

La **figure 1** représente le schémas synoptique d'un exemple SW de centre de commutation local plus particulièrement adapté pour des terminaux d'abonné analogiques, selon l'invention. Dans cet exemple, les lignes de terminaux d'abonné analogiques AT1, ..., ATq aboutissent à des cartes d'abonné ASC1, ..., ASCn, situées dans un centre de commutation local, SW, et non dans une unité de raccordement d'abonnés. Ce centre de commutation local SW comporte :
- p cartes d'abonné analogiques ASC1, ..., ASCp, chaque carte étant reliés à huit terminaux d'abonné analogiques par exemple ;
- une matrice de commutation SM utilisant la technique de commutation temporelle synchrone ;
- un dispositif CP' de traitement d'appels ;
- un ensemble de modems MD1, ..., MDm, relié à la matrice de commutation par une ligne numérique à multiplexage temporel synchrone et à haut débit, n x 64 Kb/s dans chaque sens ;
- et un routeur RT (optionnel) relié à un réseau de transmission de données à relayage de trames, FRN, ce routeur remplissant des fonction de routage Internet qui sont habituellement remplies par un routeur situé dans les locaux du fournisseur d'accès au service Internet.

Chaque carte d'abonné analogique ASC1, ..., ASCp remplit les fonctions classiques de conversion d'un signal analogique en un signal numérique à 64Kb/s pour les signaux provenant des terminaux d'abonné, et de conversion de données en signal analogique numérisé à 64Kb/s pour les signaux provenant du réseau. L'ensemble de modems MD1,...,MDm a une entrée-sortie pour des signaux analogiques numérisés, et une entrée-sortie pour des données.

Quand un terminal d'abonné, AT1 par exemple, demande l'établissement d'une communication avec un fournisseur d'accès Internet, cette demande est détectée par le circuit de traitement d'appel, CP', du centre de commutation local SW, car le numéro appelé correspond à un fournisseur d'accès Internet.

Le circuit de traitement d'appel, CP', commande la matrice de commutation SM pour :
- relier l'entrée-sortie de la carte ASC1 à l'entrée-sortie de signaux analogiques numérisés de l'un des modems MD1, ..., MDm, en lui attribuant un intervalle temporel ;
- et relier l'entrée-sortie de données de ce modem à une liaison de données qui est reliée à l'entrée du routeur RT, s'il existe, ou qui est reliée directement au réseau de transmission de données FRN.

Grâce au fait que l'ensemble de modems MD1, ..., MDm est situé le plus près possible des cartes d'abonné, la conversion circuit-paquet est réalisée précocement. Dans le sens de transmission réseau-terminal d'abonné, la conversion paquet-circuit est réalisée le plus tardivement possible. Ceci présente l'avantage de minimiser l'occupation de ressources par les communications Internet.

Le schémas synoptique serait analogue si les cartes d'abonné étaient dans une unité de raccordement d'abonnés analogiques, située à une certaine distance du centre de commutation local SW. Selon une variante de réalisation, l'ensemble de modems peut être alors intégré à l'unité de raccordement pour être au plus près des cartes d'abonné.

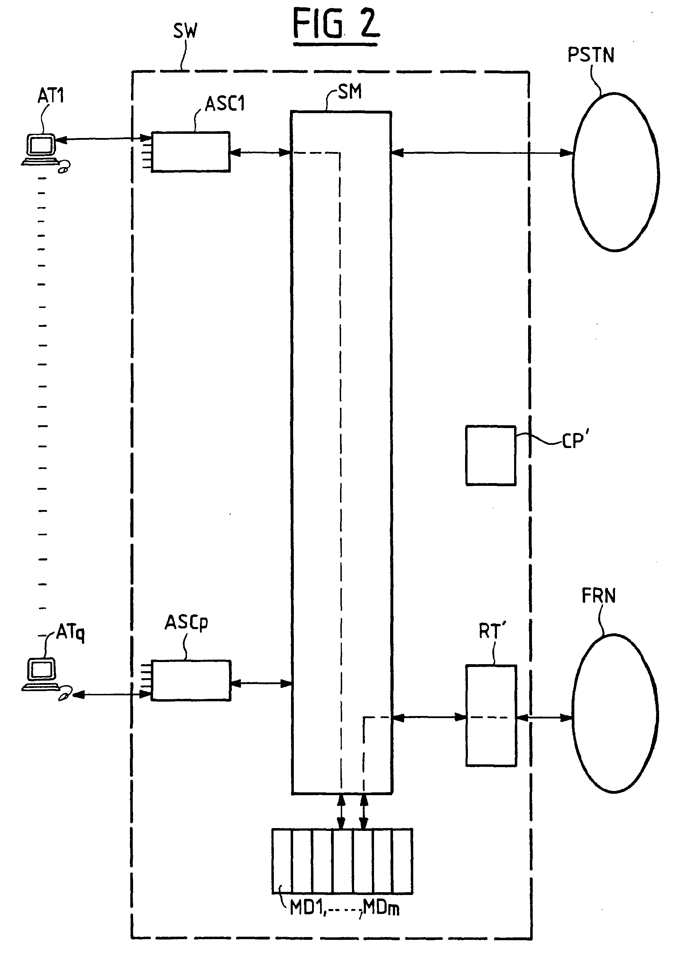

La **figure 2** représente le schémas synoptique d'un exemple de centre de commutation, ATMS, à mode de transfert asynchrone (ATM) plus particulièrement adapté pour des terminaux d'abonné analogiques munis de modems ATM /ADSL, selon l'invention.

Ce centre de commutation ATMS comporte :
- une pluralité de cartes d'abonné ADC1,..., ADCp, de type ATM / ADSL, chaque carte étant reliée, par exemple, à huit terminaux d'abonné analogiques ADT1, ..., ADT8 munis chacun d'un modem ATM / ADSL ;
- une matrice de commutation AM utilisant la technique ATM ;
- un dispositif CP" de traitement d'appels ;
- et un routeur RT" (optionnel) relié à un réseau de transmission de données de type ATM, référencé ATMN ; ce routeur RT" remplissant des fonction de terminaison de réseau de données et de routage Internet qui sont habituellement remplies par un routeur situé dans les locaux du fournisseur d'accès au service Internet.

Chaque carte d'abonné ADC1, ..., ADCp remplit les fonctions d'un modem ATM /ADSL. Elle filtre les signaux qui proviennent de la ligne d'abonné pour séparer la bande téléphonique d'une part, et la bande des données d'autre part.. Elle convertit un signal analogique en cellules transportées par un circuit virtuel ATM, pour les signaux provenant des terminaux d'abonné ; et convertit des cellules provenant du réseau en un signal analogique numérisé. En outre, elle réalise un multiplexage statistique des données provenant des différents terminaux raccordés à cette même carte ; et une décellulisation et un démultiplexage temporel des données provenant du réseau et à destination des terminaux d'abonné.

Chaque carte ADC1, ..., ADCn a une première entrèe-sortie pour des signaux vocaux analogiques, et une seconde entrée-sortie pour des cellules transportant des trames Internet. Ces deux entrées-sorties sont reliées respectivement à deux accès de la matrice AM. La matrice AM route vers le réseau téléphonique PSTN les cellules transportant des échantillons vocaux, et elle route vers le réseau ATMN de transport de données les cellules transportant des trames Internet, en collaborant avec le routeur RT".

Une variante de mode de raccordement des terminaux d'abonné munis de modems ATM / ADSL consiste à mettre en oeuvre des systèmes d'accès indépendants du centre de commutation. Les interfaces entre ces systèmes et le centre de commutation sont alors :
- des liaisons à N x 2 Mb/s transportant les signaux analogiques et RNIS ;
- et des interfaces ATM transportant les liaisons de données des terminaux d'abonné ATM / ADSL.

Le centre de commutation traite alors les signaux de façon similaire au cas où les cartes d'abonné ATM / ADSL sont intégrées dans le centre de commutation.

Quand un terminal d'abonné, ADT1 par exemple, demande l'établissement d'une communication avec un fournisseur d'accès Internet, à travers la liaison de données ATM / ADSL, cette demande est détectée par le circuit de traitement d'appel, CP", du commutateur local ATMS, car le numéro appelé correspond à un fournisseur d'accès Internet.

Le circuit de traitement d'appel, CP", commande la matrice de commutation AM pour :
- relier la première entrée-sortie de la carte ADC1 au réseau téléphonique PSTN ;
- relier la seconde entrée-sortie (entrée-sortie ATM) de la carte ADC1 à une entrée-sortie du routeur RT" ;
- et relier une autre entrée-sortie du routeur RT" au réseau ATMN de transmission de données.

L'ensemble de ces opérations étant réalisé dans le centre de commutation local, dans la carte d'abonné, le trafic dans le réseau est optimisé. Ceci présente l'avantage de minimiser l'occupation de ressources par les communications Internet.

Dans cet exemple, on n'a pas représenté de cartes d'abonné RNIS ni de carte d'abonné analogique, mais il pourrait y en avoir aussi.

Les lignes d'abonné aboutissent à des cartes d'abonné situées dans un centre de commutation, ATMS, et non dans une unité de raccordement d'abonnés distantes, mais il pourrait y avoir aussi des unités de raccordement situées à une certaine distance du centre de commutation local. Le schémas synoptique serait analogue si les cartes d'abonné étaient dans une unité de raccordement d'abonnés distantes. Il est à remarquer que le routeur RT" et le logiciel associé de gestion de service peuvent être communs à tous les types d'abonné. En effet, le centre de commutation selon l'invention traite d'une manière analogue tous les types d'abonné : analogique, numérique (RNIS), ADSL, radiotéléphonie mobile, etc.

## Revendications

1. Centre de commutation (SW ; ATMS) relié à un réseau (FRN ; ATMN) de transmission de données, et comportant des moyens de traitement d'appels (CP' ; CP") et une matrice de commutation (SM ; AM), **caractérisé en ce qu'**il comporte en outre un routeur Internet (RT' ; RT") ; et ce que les moyens de traitement d'appels (CP' ; CP") comportent des moyens pour commander la matrice (SM ; AM) de façon à faire transiter par ce routeur les communications vers un fournisseurs d'accès au service Internet.

2. Unité de raccordement d'abonnés reliée à un réseau (FRN ; ATMN) de transmission de données, et comportant une matrice de commutation (SM ; AM), **caractérisée en ce qu'**elle comporte en outre un routeur Internet (RT' ; RT") ; et en ce que cette matrice est susceptible d'être commandée de façon à faire transiter par ce routeur les communications vers un fournisseurs d'accès au service Internet.

3. Centre de commutation (SW) relié à un réseau (FRN) de transmission de données, et comportant des moyens de traitement d'appels (CP') et une matrice de commutation (SM), **caractérisé en ce qu'**il comporte en outre une pluralité de modems (MD1, ..., MDm) ; et ce que les moyens de traitement d'appels (CP') comportent des moyens pour commander la matrice (SM) de façon à faire transiter par ces modems les communications établies entre des terminaux d'abonné analogiques et un fournisseur d'accès au service Internet.

4. Unité de raccordement d'abonnés reliée à un réseau (FRN) de transmission de données, et comportant une matrice de commutation (SM), **caractérisée en ce qu'**elle comporte en outre une pluralité de modems (MD1, ..., MDm) ; et en ce que la matrice de commutation est susceptible d'être commandée de façon à faire transiter par ces modems les communications établies entre des terminaux d'abonné analogiques et un fournisseur d'accès au service Internet.
